Europäisches Patentamt

European Patent Office

Office européen des brevets

(11) Publication number: **0 416 960 A1**

# EUROPEAN PATENT APPLICATION

(21) Application number: 90309879.6

(51) Int. Cl.5: **G07F 7/10**

(22) Date of filing: 10.09.90

(30) Priority: 31.10.89 GB 8924446
08.09.89 GB 8920346

(43) Date of publication of application:
**13.03.91 Bulletin 91/11**

(84) Designated Contracting States:
**BE DE DK ES FR GB GR IT NL SE**

(71) Applicant: **FORTRONIC LIMITED**
**3/5 Burlington Gardens**
**London W1A 1DL(GB)**

(72) Inventor: **Chapman, William**
**Chestnut House, Green Road**
**Kinross, Fife, KY13 7TU(GB)**
Inventor: **Salmon, David Hunter Graham**
**8 Royal Crescent**
**Edinburgh, EH3 6PZ(GB)**
Inventor: **Kelly, Joseph**
**24 Myre Crescent**
**Kinghorn, KY3 9UB(GB)**

(74) Representative: **Skone James, Robert Edmund**
**et al**
**GILL JENNINGS & EVERY 53-64 Chancery**
**Lane**
**London WC2A 1HN(GB)**

(54) **IC card holder.**

(57) An IC card holder comprises an elongate recess (21) into which an IC card can be inserted. Contacts (25) within the recess communicate with the chip within the card. A cover extends partially over the recess but leaves an opening through which a card is inserted into the recess. A pair of wings (23,24) are positioned above the recess and extending laterally across part of the opening so as substantially to prevent longitudinal bending of the card during insertion and to retain the card in the recess after insertion.

Fig.1

## IC CARD HOLDER

The invention relates to an integrated circuit card (IC) holder.

IC cards are well known for use as credit and charge cards and the like and typically comprise a plastics laminate within which is embedded a semiconductor chip containing at least a semiconductor memory and often a microprocessor also. An example of such an IC card is described in EP-A-0311435.

It has recently been proposed to use an IC card including a memory for storing transaction details in a retail environment. This is described in more detail in British patent application no. 8920346.7. We have devised an imprinter in which transaction details and customer details for each transaction are stored on an IC card which is positioned in a holder on the underside of the imprinter.

One of the problems with conventional IC card holders is that the user of a device incorporating the holder frequently bends the card during use in an unacceptable manner. Furthermore, there is a potential for the card to fall out of the conventional holder.

In accordance with the present invention, an IC card holder comprises an elongate recess into which an IC card can be inserted; means in the recess for communicating with the semiconductor chip within the card; a cover extending partially over the recess but leaving an opening through which a card is inserted into the recess; and restraining portions positioned above the recess and extending laterally across part of the opening so as substantially to prevent longitudinal bending of the card during insertion and to retain the card in the recess after insertion.

We have realised that the main problem with bending cards is due to bending about the short axis of the card. With the invention, the restraining portions permit reasonably easy insertion and withdrawal of the card into and out of the recess but at the same time substantially prevent longitudinal bending about the short dimension either during insertion and withdrawal or when the card is fully inserted. Furthermore, the restraining portions retain the card in the recess and prevent it from falling out.

This prevention from inadvertent falling out is assisted in the preferred arrangement by providing a lip along the end of the recess adjacent the opening.

Preferably, the restraining portions comprise a pair of wings which curve laterally outwardly from a position downstream of the leading end of the opening.

The cover may comprise a simple bar positioned across the recess but preferably extends over the whole of the recess other than the region of the opening.

An example of an electronic imprinter incorporating an IC card holder according to the invention will now be described with reference to the accompanying drawings, in which:-

Figure 1 is a plan of the imprinter;

Figure 2 is a bottom plan with the battery cover withdrawn;

Figure 3 illustrates a typical IC card;

Figure 4 is a longitudinal section through the imprinter shown in Figure 1 and 2; and,

Figure 5 is a schematic, perspective view of the holder.

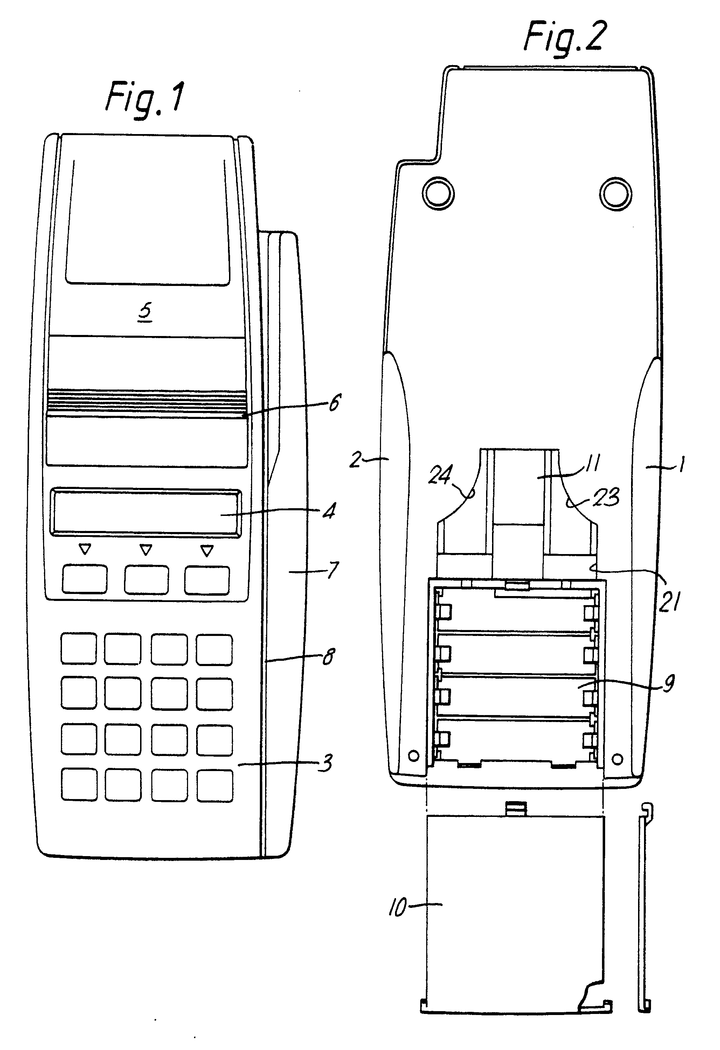

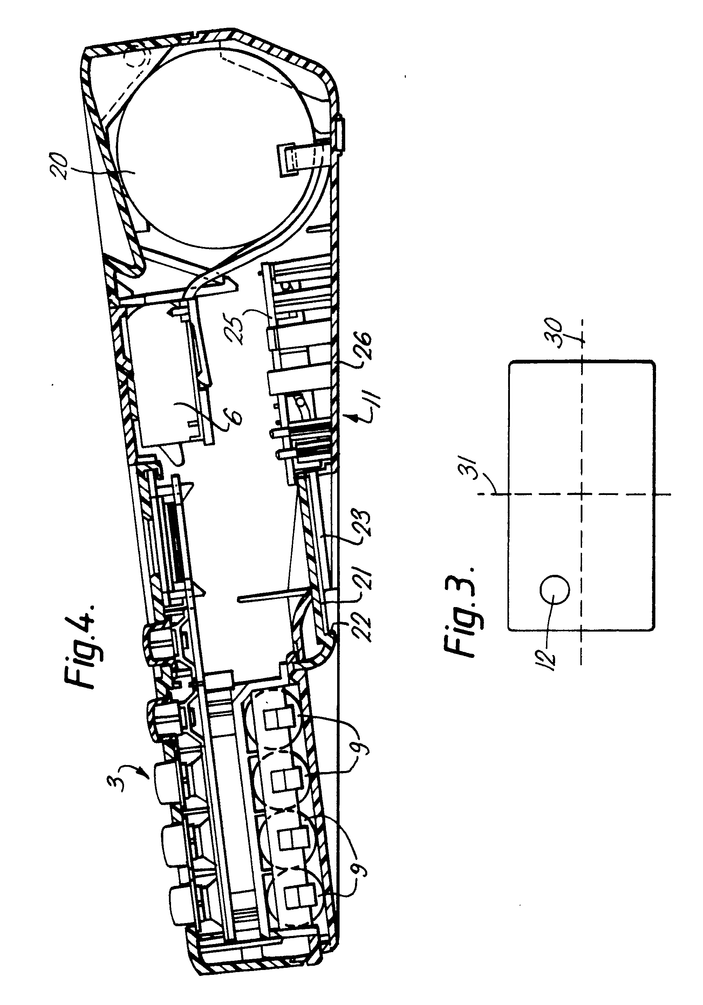

The imprinter shown in Figures 1 and 2 is for hand held use and is designed so as to fit comfortably into the operator's hands. The underside of the imprinter body is scalloped along its sides 1,2 to allow a hand to fit comfortably around the body. The upper surface of the imprinter shown in Figure 1 includes a keyboard 3, an LCD display 4 and a planar section 5 over which a length of paper passes in use from a supply spool 20 (Figure 4) mounted within the body past a printer 6. Alongside the main part of the body is provided a SWIPE reader 7 forming part of a channel 8 extending along a majority of the one side of the imprinter body.

The imprinter is powered by four batteries 9 which are mounted in a support housing on the underside of the body (Figure 2), the housing being closed by a sliding door 10. Transaction information is stored in the memory of an IC memory card (not shown) mounted in a holder 11 on the underside of the body.

The construction of the IC card (Figure 3) is of a conventional form having dimensions similar to those of a conventional credit card but with a semiconductor device 12 incorporating a memory, an I/O device and externally mounted contacts, the device being held in a plastics laminate. A suitable card is described in EP-A-0311434 incorporated herein by reference. When the card is inserted into the holder 11, the contacts on the card will engage corresponding contacts within the slot so as to couple the card with the processor within the device.

The system is now ready for use and when a customer wishes to purchase a product, he hands his credit card to the retailer who runs it along the channel 8 so as to read the data stored on a magnetic stripe bonded to the card and defining the card holders details. The retailer then keys in the transaction information following the instructions displayed on the LCD display 4. Once all the information has been entered, the microprocessor causes the information to be printed out on paper by suitably controlling the printer 6 and at the same time stores the transaction data in the store 12 of the IC card.

At some point (for example when the memory card store 12 is full or at the end of the day) the retailer will remove the memory card from the slot 11 and send it to his bank.

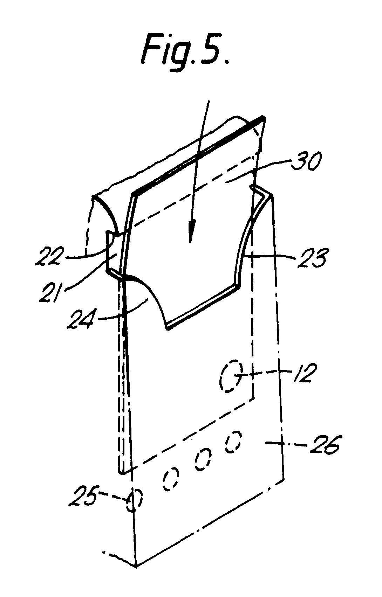

Figures 4 and 5 illustrate the IC card holder 11 in more detail. As can be seen in Figure 4, the holder comprises a recess 21 with a downwardly extending lip 22 and a pair of laterally extending wings 23,24. Contacts 25 are positioned within the holder 11 beneath a cover 26 to make contact with the contacts on the card. The ends of the wings 23, 24 facing the lip 22 are spaced sufficiently from the lip 22 to enable a card to be inserted into the recess without the first 25mm of the card having to be bent. This ensures that there is no risk of the semiconductor chip being detached from the card during insertion or withdrawal. Further insertion of the card will cause it to bend slightly in a direction transverse to its transverse (short) dimension until when the card is fully inserted it will snap down into engagement with the floor of the recess 21 where it will be retained by the wings 23, 24. It is prevented from falling out of the holder 11 by the lip 22.

Any attempts to pull up the trailing end of the card either when in situ or during withdrawal (as shown in Figure 5) will cause bowing about the longitudinal axis 30 due to the straining effect of the wings but not longitudinal bending about the transverse (short) axis 31 (Figure 3).

## Claims

1. An IC card holder comprising an elongate recess (21) into which an IC card can be inserted; means (25) within the recess for communicating with the chip within the card; a cover extending partially over the recess but leaving an opening through which a card is inserted into the recess; and restraining portions (23,24) positioned above the recess and extending laterally across part of the opening so as substantially to prevent longitudinal bending of the card during insertion and to retain the card in the recess after insertion.

2. A holder according to claim 1, wherein a lip (22) is provided at the rear end of the recess adjacent the opening to prevent the card from falling out of the recess.

3. A holder according to claim 1 or claim 2, wherein the restraining portions comprise a pair of wings (23,24) which curve laterally outwardly from a position downstream of the leading end of the opening.

4. An electronic imprinter incorporating an IC holder according to any of the preceding claims.

# Fig.1

## 5

6

4

7

8

3

# Fig.2

2

24

11

23

1

21

9

10

Fig.4.

Fig.3.

# Fig.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | WO-A-8 200 213  (BENTON)<br>* abstract; claims 1-13; figures 1-8 *<br>— — — | 1-4 | G 07 F 7/10 |
| A | US-A-4 719 338  (AVERY ET.AL.)<br>* abstract; claims 1-3; figures 1, 2 * * column 2, lines 21 - 55 @ column 6, lines 6 - 26 *<br>— — — | 1-4 | |
| A | US-A-4 737 911  (FREEMAN, JR.)<br>* abstract; claim 1; figure 1 *<br>— — — | 1-4 | |
| A | DE-A-3 632 294  (SIEMENS AG)<br>* the whole document *<br>— — — | 1-3 | |
| A | DE-A-3 637 684  (SHARP K.K.)<br>* abstract; claims 2-4; figures 1-7 *<br>— — — | 1-4 | |
| A | US-A-4 277 837  (STUCKERT)<br>* abstract; claims 1-6; figures 1-8 *<br>— — — | 1-3 | |
| A | GB-A-2 156 552  (SHARP K.K.)<br>* abstract; claims 1-9; figures 1, 2 *<br>— — — | 1-3 | TECHNICAL FIELDS SEARCHED (Int. Cl.5) |
| A | FR-A-2 619 463  (ANTOINE)<br>* the whole document *<br>— — — — — | 1-3 | G 07 F<br>G 06 K<br>G 06 F |

The present search report has been drawn up for all claims

| Place of search | Date of completion of search | Examiner |
|---|---|---|
| The Hague | 14 December 90 | GUIVOL,O. |